# EUROPEAN PATENT SPECIFICATION

(11) **EP 1 426 085 B1**
(45) Date of publication and mention of the grant of the patent: **03.06.2009**
(21) Application number: 02388076.8
(22) Date of filing: 03.12.2002
(51) Int. Cl.: A63F 13/08, H04N 7/14, G06F 1/16, H04M 1/02

(54) **A portable electronic device comprising handles with functional means**
Tragbares elektronisches Gerät einschliesslich Griffen mit Funktionsmitteln
Un dispositif électronique portable comprenant des poignées avec des moyens fonctionnels

(43) Date of publication of application: 09.06.2004
(60) Divisional application: 09155243.0
(73) Proprietor: Sony Ericsson Mobile Communications AB, 221 88 Lund (SE)
(72) Inventor: Hermann, Fredrik, 217 54 Malmö (SE)
(74) Representative: Andersen, Poul Hoeg

(56) References cited:
- GB-A- 2 316 466
- US-A- 5 502 460
- US-A1- 2002 058 531
- US-A1- 2002 132 640
- US-B1- 6 249 684

## Description

### Technical area

The invention relates to a portable electronic device comprising a main body provided with a display and comprising at least one handle that is connected to the main body in such manner that it can be shifted between a neutral position and an operative position, said handle disclosing no visible and operational functional means when in the neutral position and said handle being provided with functional means that is visible and operational when the handle is in the operative position only.

### Related prior art

US-B1-6,249,684 discloses a portable electronic device in the form of a wireless telephone that is provided with an ergonomic grip or handle. The handle is attached to the wireless telephone in a manner such that the wrist of a user of the wireless telephone is maintained in an ergonomically correct position while the wireless telephone is operated as a telephone, i.e. when the wireless telephone is held close to the ear and mouth. The handle is connected rotatably to the main body of the wireless telephone so that it can be folded to overlay a part of the main body of the wireless telephone when it is not in use. The handle is provided with an undulated surface for improving the grip thereof, but does not disclose any other technical functional means.

There are known other portable electronic devices, e.g. electronic game devices, which are provided with one or two gripping portions that are provided with press buttons. The gripping portions of these electronic devices are configured as a part of the main body of the electronic device and the only purpose of these gripping portions is to improve the ergonomically correct grasping of the electronic device.

### Object of the invention

In the prior art portable electronic devices described above, the handle is either not provided with any functional means or is provided with functional means, e.g. press buttons, which are always exposed to the exterior surface of the handles. In certain applications it would be desirable to conceal the functional means when not in use, either for avoiding unintentional use of the functional means or for protecting the functional means. If the functional means is e.g. a camera that is incorporated in the handle, it would be desirable to protect it when it is not in use.

US 2002/132640 and GB-A-2 316 466 disclose electronic devices with functional means provided on fold out keypads. The devices are arranged on the keypads such that keypads can be folded into the body. When the keypads are folded into the body, the functional means provided on the keypads are covered by the body, thereby making them inaccessible and invisible to the user. However, the above solution only works for keypads which can be folded into the body.

It is therefore an object of the invention to provide a portable electronic device with a handle that is arranged in such manner that the above-described problems are solved.

### Summary of the invention

The object of the invention is achieved by providing the handle of the portable electronic device mentioned in the opening paragraph with at least one opening which is closed by a cover element when the handle is in the neutral position and which exposes the functional means when the handle is in the operative position. Thereby the handle can be made with a smooth outer surface when it is in the neutral position where the cover element covers the opening in the handle.

It is furthermore, thereby achieved that the functional means incorporated in the handle is well-protected and cannot be used unintentionally when the handle is in the neutral position, while full use of the functional means is provided for when the handle is in the operative position.

In a preferred embodiment the handle is rotatably connected to the main body of the portable electronic device, and it is shifted from the neutral position to the operative position by rotation about an axis of rotation. By arranging the handle rotatable in relation to the main body of the electronic device, it is possible to obtain a more ergonomically correct position of the handle when the functional means provided in the handle are applied. Thereby it is possible to reduce the risk of hand injury if the electronic device is used for a longer time, and the portable electronic device may be held in a more stable position which might be desirable when using certain functional features.

The functional means is preferably arranged rotatably within the handle and is arranged to be visible through the opening as a response to rotation of the handle from the neutral position to the operative position. In this manner, the functional means will be exposed automatically when the handle is rotated from its neutral position to its operative position, and it will be retracted and concealed automatically when the handle is rotated from its operative position to its neutral position.

The functional means may comprise at least one press button, but preferably it comprises a plurality of press buttons arranged to navigate an object that is displayed on the display. This arrangement of the functional means is very useful if the electronic device is a game device or if the display on the electronic device shows a menu-controlled or icon-operated user interface.

Alternatively or additionally the functional means may comprise a camera. Due to the structure of the electronic device such camera will be well-protected when it is not in use, i.e. when the handle is in its neutral position, whereas it will be fully exposed and operational when the handle is shifted to its operative position.

In a preferred embodiment the portable electronic device comprises wireless telecommunications means, and most preferably it is a mobile telephone.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Figs 1a and 1b show a portable electronic device according to the invention with handles in a neutral position;
Figs 2a and 2b show the electronic device shown in Figs 1a and 1b with handles in a position between the neutral position and an operative position;
Figs 3a, 3b and 3c show the electronic device shown in Figs 1a and 1b with handles in the operative position; and
Fig. 4 shows a hook part of a handle.

### Detailed description of an embodiment of the invention

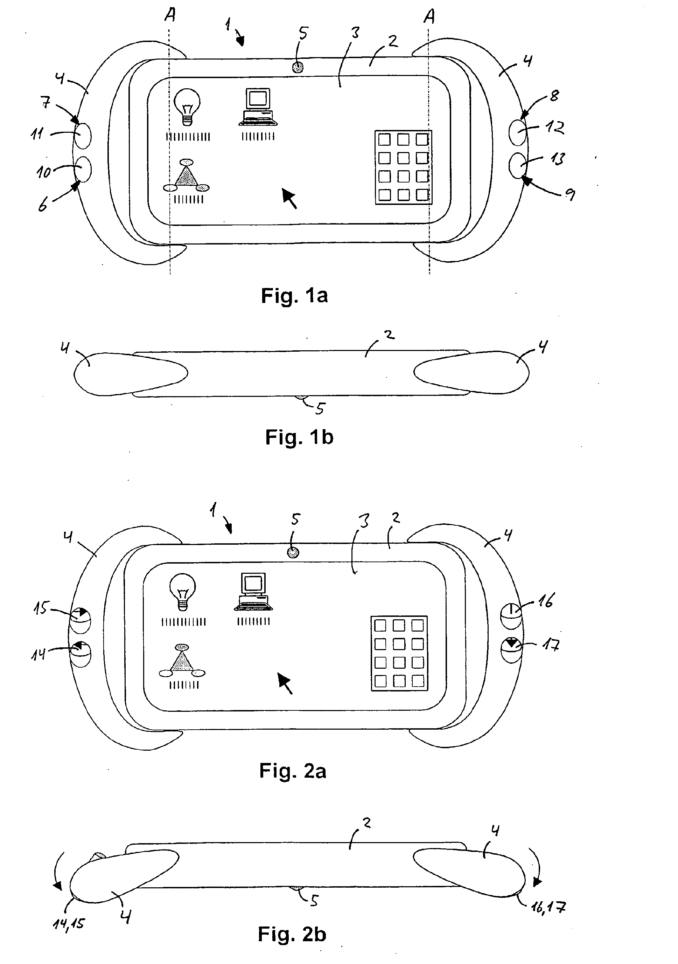

Figs 1a and 1b show a portable electronic device 1 having a main body 2 that is provided with a display 3 and two handles 4. Fig. 1a shows the electronic device 1 seen perpendicular to the display 3 and Fig. 1b shows the electronic device 1 seen from above. The handles 4 are positioned in a neutral position, i.e. in a position where any functional means (to be described below) provided in the handles 4 are inoperative. In the shown embodiment, the handles 4 lie in the same plane as the main body 2 as best seen in Fig. 1b when they are in the shown neutral position.

The main body 2 of the portable electronic device 1 is provided with a display 3 that is arranged to show any desired information like a small computer screen or a display on any conventional small portable electronic device (e.g. a mobile telephone, a PDA, etc.). Also graphic games may be displayed on the display 3.

The electronic device 1 is preferably a wireless telecommunications device, and in the embodiment shown, the main body furthermore includes a camera 5 on the same side as the display 3. The inclusion of the camera 5 makes the electronic device 1 suitable for video conferences, where the user points the camera 5 towards himself while he watches the display 3 that shows another person participating in the video conference.

Other functional means, such as press buttons, may be provided in the main body 2 of the electronic device 1. For instance, if the electronic device 1 is a mobile telephone, the main body could include a number of press buttons forming a key pad, a microphone and a speaker. The key pad could, of course, be featured as a virtual key pad shown on the display 3 as illustrated in Figs 1a, 2a and 3a.

The handles 4 do not disclose any functional means when they are positioned in the neutral position shown in Figs 1a and 1b, i.e. they each appear with a generally smooth outer surface. However, openings 6,7,8,9 are provided in the handles 4, but each one of them is closed by a cover element 10,11,12,13. Therefore, any functional means incorporated in the handles 4 cannot be operated, when the handles 4 are in their neutral position.

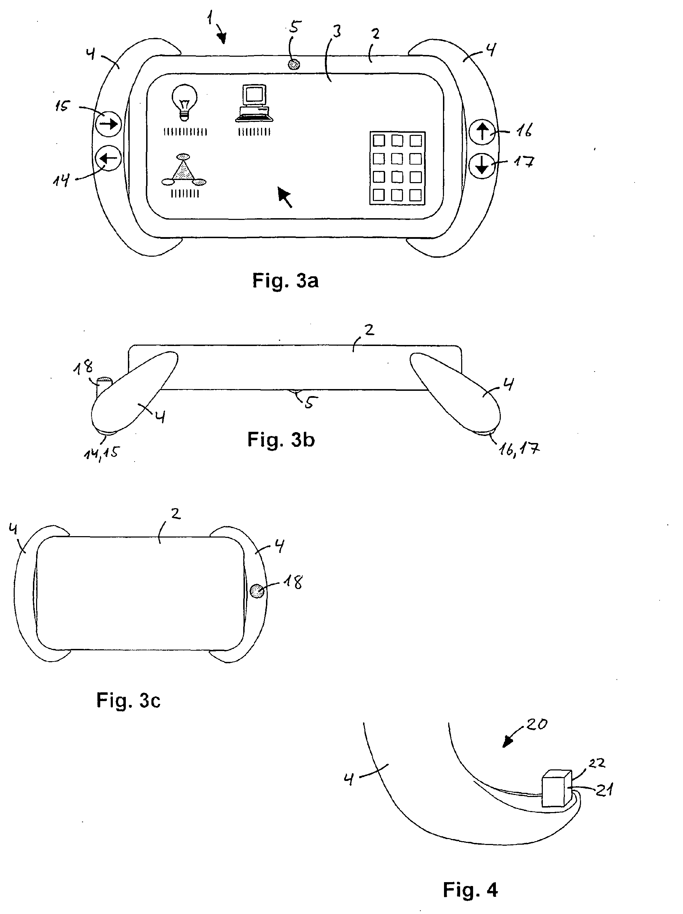

Figs 2a and 2b show the electronic device 1 shown in Figs 1a and 1b with the handles 4 in a position between the neutral position and an operative position which is shown in Figs 3a, 3b and 3c and is discussed below. In the shown embodiment each of the handles 4 is connected rotatably about an axis of rotation A (see Fig. 1a) to the main body 2 of the electronic device 1. Therefore, when the handles 4 are to be shifted from their neutral position to the operative position they must be rotated about the axis of rotation A towards the user as indicated by the arrows in Figs 2b. As shown in Figs 2a and 2b functional means such as press buttons 14,15,16,17 have become partly exposed and will be fully visible and operational when the handles 4 are shifted further to the operative position shown in Figs 3a, 3b and 3c.

When the handles 4 are shifted to the operative position shown in Figs 3a, 3b and 3c the functional means, such as press buttons 14,15,16,17 are fully visible and operational. Furthermore, in the shown embodiment a second camera 18 is provided in one of the handles 4, which camera 18 constitutes yet another functional means that becomes visible and operational once the handles 4 are in the operative position. The camera 18 is positioned in the central area of the rear side of one of the handles 4 as shown in Fig. 3c, that shows the rear side of the electronic device 1 with the handles 4 in the operative position. The camera 18 thereby points away from the user, and can be used for recording still pictures or record video sequences as desired. When the handles 4 are in the neutral position as shown in Figs 1 and 1b, the camera 18 is concealed and well-protected within the handle 4.

In the shown embodiment the press buttons 14,15 provided on the left handle 4 are provided with left and right arrows indicating that these press buttons 14,15 are intended for controlling the movement of e.g. a cursor 19 left and right on the display 3. Likewise, the press buttons 16,17 provided on the right handle 4 are provided with up and down arrows indicating that these press buttons 16,17 are intended for controlling the movement of e.g. a cursor 19 up and down on the display 3. Of course, other functions can be assigned to the press buttons 14,15,16,17, such as controlling the movement of a figure in a game displayed on the display, zooming in and out with the camera 18, or any other desired function.

The handles 4 are rotatably connected to the main body 2 of the electronic device 1. The connection between the handles 4 and the main body 2 comprises indexing means that registers the position of the handles 4, i.e. whether the handles 4 are in the neutral position or in the operative position. Any change of the position of the handles 4 is registered electronically and suitable signals are sent to nanomotors or to other drive sources that mechanically shift the functional means, such as the press buttons 14,15,16,17 and the camera 18, from a concealed position in the neutral position of the handles 4 to an operational position in the operative position of the handles 4 or vice versa. Preferably, the functional means are rotated 180° within the handles 4 when they are rotated from the concealed position to the operative position. Therefore, when the handles 4 are in the neutral position the rear side of each of the functional means constitutes a cover element 10,11,12,13 that closes the openings 6,7,8,9 provided in the handles 4 (see Fig. 1).

The means for registering the position of the handles 4 and the means for shifting the functional means from the concealed position to the operational position will not be described in more detail herein, since a person skilled in the art could easily provide such means.

Each end of the handles 4 is preferably provided with a hook part 20 with a polygonal cross-section, preferably a square cross-section, as shown in Fig. 4. The hook part 20 fits into an opening (not shown) provided in the main body 2 of the portable electronic device 1, and the side edges 21 and the corners 22 of the polygonal-shaped hook part 20 are used for determining the position and orientation of the handles 4. The polygonal-shaped hook part 20 is used for temporarily locking the handles 4 in either the neutral position or the operative position. The locking mechanism preferably comprises spring-biased latches or the like provided within the opening in the main body 2 which latches or the like engage the polygonal-shaped hook part 20 of the handles 4 (not shown in detail). A person skilled in the art can easily provide such features, and the details thereof will not be described more herein.

The shown embodiment of a portable electronic device according to the invention is provided with two C-shaped handles 4. However, the handles may be given any other shape and still fall within the scope of the claims. Also, the handles are shown as being rotatably connected to the main body of the electronic device. Shifting of the handles, however, can be accomplished in other ways, such as a linear displacement of the handles in relation to the main body of the electronic device. The number of handles may also be varied from one to several depending on the actual application.

## Claims

1. A portable electronic device (1) comprising a main body (2) provided with a display (3) and comprising at least one handle (4) that is connected to the main body (2) in such manner that it can be shifted between a neutral position and an operative position, said handle (4) disclosing no visible and operational functional means (14,15,16,17,18) when in the neutral position, and said handle (4) being provided with functional means (14,15,16,17,18) that is visible and operational when the handle (4) is in the operative position only, **characterised in that** the handle (4) is provided with at least one opening (6,7,8,9) which is closed by a cover element (10,11,12,13) when the handle (4) is in the neutral position and which exposes the functional means (14,15,16,17,18) when the handle (4) is in the operative position.

2. A portable electronic device according to claim 1, **characterised in that** the handle (4) is rotatably connected to the main body (2) of the electronic device (1), and that it is shifted from the neutral position to the operative position by rotation about an axis of rotation (A).

3. A portable electronic device according to claim 1 or 2, **characterised in that** the functional means is arranged rotatably within the handle (4) and is arranged to be visible through the opening (6,7,8,9) as a response to rotation of the handle (4) from the neutral position to the operative position.

4. A portable electronic device according to any one of claims 1-3, **characterised in that** the functional means (14,15,16,17,18) comprises at least one press button (14,15,16,17).

5. A portable electronic device according to any one of claims 1-4, **characterised in that** the functional means (14,15,16,17,18) comprises a plurality of press buttons (14,15,16,17) arranged to navigate an object that is displayed on the display (3).

6. A portable electronic device according to any one of claims 1-5, **characterised in that** the functional means (18) comprises a camera (18).

7. A portable electronic device according to any one of claims 1-6, **characterised in that** the electronic device (1) comprises wireless telecommunications means.

8. A portable electronic device according to claim 7, **characterised in that** the electronic device (1) is a mobile telephone.

## Patentansprüche

1. Tragbares elektronisches Gerät (1) umfassend einen Hauptkörper (2), der mit einer Anzeige (3) versehen ist und mindestens einen Handgriff (4) umfasst, welcher mit dem Hauptkörper (2) in solch einer Weise verbunden ist, dass er zwischen einer neutralen Position und einer Betriebsposition verschiebbar ist, wobei der besagte Handgriff (4) keine sichtbaren und operationellen Funktionsmittel (14, 15, 16, 17, 18) aufweist, wenn er in der neutralen Position ist, und dass der besagte Handgriff (4) mit Funktionsmitteln (14, 15, 16, 17, 18) versehen ist, die sichtbar und operationell sind, nur wenn der Handgriff (4) in der Betriebsposition ist, **dadurch gekennzeichnet, dass** der Handgriff (4) mit mindestens einer Öffnung (6, 7, 8, 9) versehen ist, welche durch ein Abdeckelement (10, 11, 12, 13) verschlossen ist, wenn der Handgriff (4) in der neutralen Position ist, und welcher die Funktionsmittel (14, 15, 16, 17, 18) freilegt, wenn der Handgriff (4) in der Betriebsposition ist.

2. Tragbares elektronisches Gerät nach Anspruch 1, **dadurch gekennzeichnet, dass** der Handgriff (4) in drehbarer Weise mit dem Hauptkörper (2) des elektronisches Geräts (1) verbunden ist und dass er aus der neutralen Position in die Betriebsposition durch Drehung um eine Rotationsachse (A) verschoben werden kann.

3. Tragbares elektronisches Gerät nach Anspruch 1 oder 2, **dadurch gekennzeichnet, dass** die Funktionsmittel innerhalb des Handgriffs (4) in drehbarer Weise angeordnet sind, und dass sie angeordnet sind, um durch die Öffnung (6, 7, 8, 9) als Antwort auf die Rotation des Handgriffs (4) aus der neutralen Position in die Betriebsposition sichtbar sind.

4. Tragbares elektronisches Gerät nach einem der vorstehenden Ansprüche 1 bis 3, **dadurch gekennzeichnet, dass** die Funktionsmittel (14, 15, 16, 17, 18) mindestens einen Druckknopf (14, 15, 16, 17) umfassen.

5. Tragbares elektronisches Gerät nach einen der vorstehenden Ansprüche 1 bis 4, **dadurch gekennzeichnet, dass** die Funktionsmittel (14, 15, 16, 17, 18) eine Vielzahl von Druckknöpfen (15, 16, 17) aufweisen, die angeordnet sind, um ein Objekt zu navigieren, welches auf der Anzeige (3) angezeigt wird.

6. Tragbares elektronisches Gerät nach einem der vorstehenden Ansprüche 1 bis 5, **dadurch gekennzeichnet, dass** die Funktionsmittel (18) eine Kamera (18) umfassen.

7. Tragbares elektronisches Gerät nach einem der vorstehenden Ansprüche 1 bis 6, **dadurch gekennzeichnet, dass** die elektronische Vorrichtung (1) ein drahtloses Telekommunikationsmittel umfasst.

8. Tragbares elektronisches Gerät nach Anspruch 7, **dadurch gekennzeichnet, dass** das elektronische Gerät (1) ein Mobiltelefon ist.

## Revendications

1. Dispositif électronique portable (1), comprenant un corps principal (2), prévu avec un écran (3) et comprenant au moins une poignée (4), qui est connectée avec le corps principal (2) d'une telle manière qu'elle puisse être déplacée entre une position neutre et une position opérationnelle, où ladite poignée (4) ne montre aucun moyen fonctionnel (14, 15, 16, 17, 18) visible ou opérationnel quand il se trouve dans sa position neutre, et où cette poignée (4) est prévue avec des moyens fonctionnels (14, 15, 16, 17, 18) qui sont visibles et opérationnels seulement quand la poignée (4) se trouve dans la position opérationnelle, **caractérisé en ce que** la poignée (4) est prévue avec au moins une ouverture (6, 7, 8, 9) qui est fermée par un élément de couverture (10, 11, 12, 13) quand la poignée (4) se trouve dans la position neutre et qui expose les moyens fonctionnels (14, 15, 16, 17, 18) quand la poignée (4) se trouve dans la position opérationnelle.

2. Dispositif électronique portable selon la revendication 1, **caractérisé en ce que** la poignée (4) est connectée d'une manière rotative au corps principal (2) du dispositif électronique (1) et **en ce qu'**elle peut être déplacée d'une position neutre dans une position opérationnelle par rotation autour d'un axe de rotation (A).

3. Dispositif électronique portable selon la revendication 1 et 2, **caractérisé en ce que** les moyens fonctionnels sont arrangés d'une manière rotative à l'intérieur de la poignée (4) et sont arrangés pour être visibles à travers l'ouverture (6, 7, 8, 9) comme réponse à la rotation de la poignée (4) de la position neutre à la position opérationnelle.

4. Dispositif électronique portable selon l'une quelconque des revendications 1 à 3, **caractérisé en ce que** les moyens fonctionnels (14, 15, 16, 17, 18) comprennent au moins un bouton-poussoir (14, 15, 16, 17) .

5. Dispositif électronique portable selon l'une des revendications 1 à 4, **caractérisé en ce que** les moyens fonctionnels (14, 15, 16, 17, 18) comprennent une pluralité de bouton-poussoir (14, 15, 16, 17), arrangés pour naviguer un objet qui est affiché sur l'écran (3).

6. Dispositif électronique portable selon l'une quelconque des revendications 1 à 5, **caractérisé en ce que** les moyens fonctionnels (18) comprennent une caméra (18).

7. Dispositif électronique portable selon l'une quelconque des revendications 1 à 6, **caractérisé en ce que** le dispositif électronique (1) comprend des moyens de télécommunication sans fil.

8. Dispositif électronique portable selon la revendication 7, **caractérisé en ce que** le dispositif électronique (1) est un téléphone mobile.
